# EUROPEAN PATENT SPECIFICATION

(11) **EP 1 707 027 B1**
(45) Date of publication and mention of the grant of the patent: **09.04.2008**
(21) Application number: 05702629.6
(22) Date of filing: 10.01.2005
(51) Int. Cl.: H04R 3/04

(54) **AUDIO SIGNAL ENHANCEMENT**
AUDIOSIGNAL-VERBESSERUNG
AMÉLIORATION DE SIGNAL AUDIO

(30) Priority: 13.01.2004 EP 04100092
(43) Date of publication of application: 04.10.2006
(73) Proprietor: Koninklijke Philips Electronics N.V., 5621 BA Eindhoven (NL)
(72) Inventor: VAN RECK, Kristof, NL-5656 AA Eindhoven (NL)
(74) Representative: Damen, Daniel Martijn
(86) International application number: PCT/IB2005/050110
(87) International publication number: WO 2005/069679

(56) References cited:
- WO-A-99/26454
- US-A- 4 398 061
- US-A- 5 672 999
- US-A- 6 111 960

## Description

The present invention relates to audio signal enhancement. More in particular, the present invention relates to a method and a device for improving the perceived quality of an audio signal.

It is well known to enhance audio signals, for example by amplifying one frequency range more strongly than another frequency range. In this way, it is possible to "boost" higher and lower frequencies which are typically perceived to be less loud than mid-range frequencies. However, it has been found that many transducers are not capable of rendering high and low frequencies at an appreciable sound level without introducing distortion. This is especially a problem for low audio frequencies or "bass" frequencies.

It has been proposed to enhance an audio signal by adding harmonics of the bass frequencies as disclosed in, for example, United States Patent 6,111,960. The enhancement signals are produced by a harmonics generator and then added to the (amplified) original audio signal. The added harmonics are perceived as an amplified bass signal. It has further been proposed to add sub-harmonics of the audio signal to create the impression of bass enhancement.

Although adding harmonics or sub-harmonics provides a significant improvement of the audio signal, some listeners are not entirely content with the resulting enhanced audio signals, as in some audio signals these techniques may introduce artifacts due to the gain control mechanism used.

It is therefore an object of the present invention to overcome these and other problems of the Prior Art and to provide a method of and a device for enhancing audio signals which introduce substantially no artifacts or distortion.

Accordingly, the present invention provides a method of enhancing an audio signal, the method comprising the steps of:
- filtering the audio signal so as to select a frequency range,
- dividing the audio signal of the selected frequency range into time segments, and
- scaling the audio signal in each time segment so as to increase the sound level of the audio signal in said frequency range,
wherein the time segments are defined by zero crossings of the filtered audio signal.

By dividing the audio signal into time segments defined by zero crossings of the audio signal, it is possible to scale the signal in each time segment without introducing any substantial distortion. By scaling the signal per time segment, a very precise scaling may be achieved, increasing the sound level of the audio signal while avoiding any signal distortion. By applying this scaling per time segment only on a selected frequency range, it is possible to increase the sound level of this frequency range relative to the remainder of the audio signal.

It is noted that scaling audio signals using time segments defined by zero crossings is known *per se* from United States Patent US 5,672,999. However, the scaling of US 5,672,999 is carried out for an entirely different purpose: to avoid "clipping", that is, to avoid the signal distortion caused by audio signals having an amplitude which is too large and which needs to be scaled down. In contrast, the present invention relates to audio signal amplitudes which typically have to be scaled up to enhance specific signal components. Also, the clipping avoidance apparatus of US 5,672,999 scales all frequencies of the audio signal, while the method and device of the present invention scale only the signal components of a selected frequency range.

As a further example of prior art, the document WO9926454 is cited. This document discloses an audio enhancement system, in particular a bass enhancement system, in which left and right audio signals of a stereo audio system are filtered in a lowpass filter. The filtered signal is fed to a peak detector and, through an amplifier, to a zero crossing detector. The zero crossing detector output is provided to a trigger input of a monostable such that the monostable is triggered each time the output of the lowpass filter passes through zero. Pulses of 150 milliseconds are produced by the monostable when triggered which cause a number of parallel arranged filters to "ring", producing harmonic frequencies. These harmonic frequencies are amplified in amplifiers associated with the bandpass filter, the amplifiers having an amplification of two. In another embodiment, gain control is by automatic gain control blocks associated with the bandpass filters.

In the present invention, the boundaries of the time segments correspond with zero crossings of the audio signal of the selected frequency range, so as to avoid any signal distortions or the introduction of any undesired harmonics. Of course any time segment could comprise multiple sections, each section being bounded by two zero crossings, the time segment thereby extending over one or more zero crossings. It is preferred, however, that each time segment is defined by two consecutive zero crossings of the filtered audio signal. In the preferred embodiment, therefore, no zero crossings lie within a time segment and all zero crossings define time segment boundaries. This allows a more precise scaling of the audio signal as the time segments are as small as possible while retaining the benefit of zero crossing defined boundaries.

It is of course possible to apply a single scaling factor to all or a plurality of time segments, thus providing a substantially uniform scaling. It is preferred, however, that the step of scaling the audio signal involves a distinct scaling factor for each time segment. That is, for each time segment a new scaling factor is determined. Of course the numerical value of this scaling factor may prove to be identical to that of another time segment. A separate scaling factor for each time segment allows a very well-defined and precise scaling of the audio signal.

Several types of scaling factors may be utilized. In a practical embodiment, the step of scaling involves a constant scaling factor. This embodiment has the advantage of being simple yet effective. However, in other embodiments the step of scaling involves a variable scaling factor, that is, a scaling factor that varies with the amplitude with the signal. As a result, the scaling factor may for example decrease with the amplitude, applying a greater "boost" to low amplitude signals than to high amplitude signals. Such a variable scaling factor may be either linear or non-linear. Advantageous non-linear scaling factors may involve a quadratic or cubic function.

The scaling discussed above is applied to a selected frequency range of the audio signal. The method of the present invention preferably comprises the further step of:
- combining the scaled audio signal of the selected frequency range and the remainder of the audio signal of the previously not selected frequency range.

This provides a combined output signal in which both the enhanced part of the audio signal and the remainder of the audio signal is present.

In a preferred embodiment, the method of the present invention further comprises the steps of:
- comparing the amplitude of the combined audio signal with a threshold value, and
- adjusting the amplitude of the audio signal if the threshold is exceeded.

This provides a check on the enhanced audio signal and prevents any "clipping" of the signal. In this way, the audio signal which was scaled up in a previous step may be scaled down (to a limited extent) in this further step to avoid any signal distortion. It is preferred that only the amplitude of the audio signal of the selected frequency range is adjusted. It would be possible to adjust the amplitude of the entire audio signal, that is both the selected (and scaled) frequency range and the remainder of the audio signal, but that would result in a scaling down of the remainder of the audio signal, which is generally not desirable. By only adjusting the audio signal of the selected frequency range, any excessive enhancement can be compensated for.

It is possible to compare and adjust several time segments, or even the entire audio signal, substantially simultaneously. However, it is preferred that the steps of comparing the amplitude of the combined audio signal and a threshold value, and adjusting the amplitude of the combined audio signal is carried out per time segment. This allows a more accurate adjustment and avoids scaling down many time segments altogether.

Although the selected frequency range can be chosen arbitrarily, in a particularly advantageous embodiment the selected frequency range is a bass frequency range. The present invention therefore provides a very advantageous method of bass enhancement or "bass boost". Bass audio frequencies are generally understood to lie in the range of 0 Hz to approximately 300 Hz, although other range boundaries may also be used, for example 20 Hz - 200 Hz or 30 Hz - 150 Hz.

The method of the present invention may advantageously comprise the further step of delaying any the signal components of other frequency ranges. That is, the part of the audio signal which is not of the selected frequency range may be delayed so as to compensated for any processing delay in the selected frequency range. This ensures that the frequency components of the selected frequency range and those of the remaining frequency ranges are available substantially simultaneously.

The present invention also provides a device for enhancing an audio signal, the device comprising:
- filter means for filtering the audio signal so as to select a frequency range,
- dividing means for dividing the audio signal of the selected frequency range into time segments, and
- scaling means for scaling the audio signal in each time segment so as to increase the sound level of the audio signal in said frequency range,
wherein the time segments are defined by zero crossings of the filtered audio signal.

Advantageously, the dividing means are arranged for defining each time segment by two consecutive zero crossings of the filtered audio signal.

A device according to the invention may be comprised in an audio (stereo) amplifier, a home cinema system, an announcement system or any other suitable audio apparatus.

The present invention further provides an audio system comprising a device as defined above.

The present invention will further be explained below with reference to exemplary embodiments illustrated in the accompanying drawings, in which:
Fig. 1 schematically shows a first embodiment of a device for enhancing audio signals according to the present invention.
Fig. 2 schematically shows a second embodiment of a device for enhancing audio signals according to the present invention.
Fig. 3 schematically shows the scaling unit of the device of Figs. 1 and 2 in more detail.
Figs. 4a-c schematically show audio waveforms as used in the present invention.
Fig. 5 schematically shows a method of enhancing audio signals in accordance with the present invention.

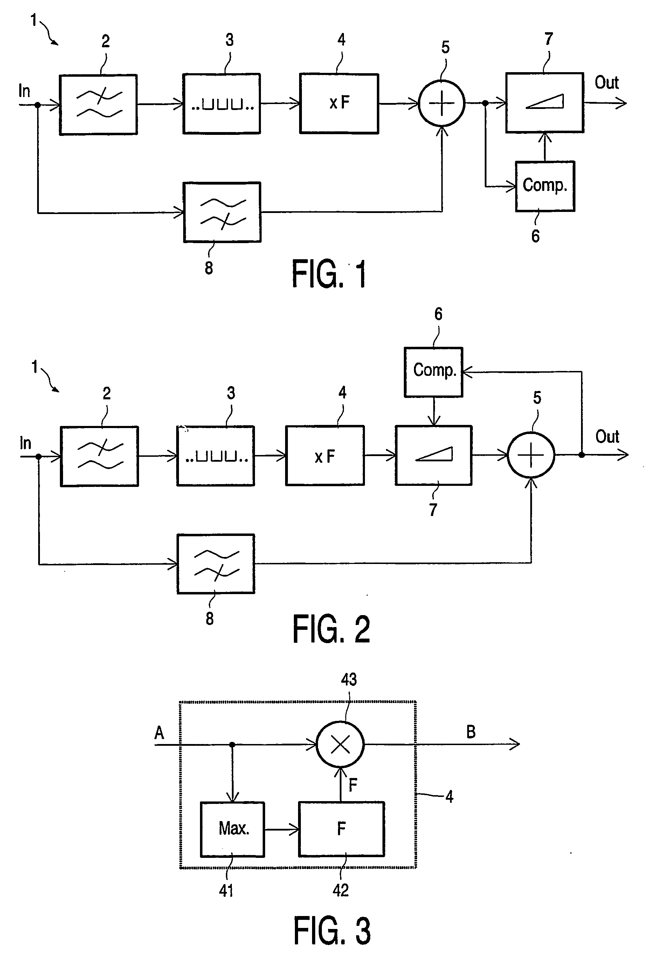

The device 1 shown merely by way of non-limiting example in Fig. 1 comprises a filter unit 2 for filtering the audio signal so as to select a frequency range, a segmenting unit 3 for dividing the audio signal of the selected frequency range into time segments, and a scaling unit 4 for scaling the audio signal in each time segment so as to increase the sound level of the audio signal in said frequency range. In the embodiment shown, the following optional units are also present: a combining unit 5, a comparison unit 6, an adjustment unit 7 and a delay/filter unit 8. Although it is possible to implement the device 1 using analog techniques, it will be assumed that the device 1 is arranged for digitally processing audio signals and that the audio signals are provided in digital form as samples. It will be understood that a sample-and-hold unit, known *per se,* could be added to the device 1 if the audio signal were available in analog form only.

The filter unit 2 selects a frequency range that will be subjected to signal enhancement according to the present invention. In a preferred embodiment the frequency range selected comprises bass frequencies, for example frequencies ranging from 0 Hz to approximately 300 Hz, although other frequency ranges are also possible, for example from 20 Hz to approximately 150 or 200 Hz. It has been found that the present invention is particularly suitable for providing "bass boost", that is, for enhancing the lower (bass) frequencies of an audio signal, although mid-range frequencies or higher frequencies can also be enhanced if desired.

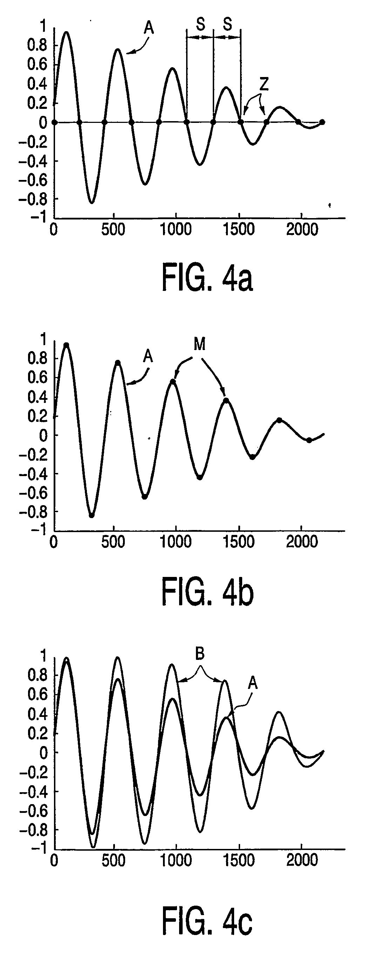

The filtered audio signal of the selected frequency range is divided into time segments by a segmenting unit 3 which, in accordance with the present invention, comprises a zero crossing detector. Such detectors are known *per se.* According to the present invention, the filtered audio signal is divided into segments which are bounded by zero crossings. This is illustrated in Fig. 4a where an audio signal waveform A is shown to have zero crossings Z. In the preferred embodiment, a segment S is defined by two adjacent zero crossings, although segments could extend over zero crossings and be defined by, for example, each first and third zero crossing. However, the relatively small segments defined by neighboring zero crossings allow a more precise scaling and further processing of the audio signal. It may be advantageous to define a minimum time segment to ensure a minimum number of samples in each segment, a segment smaller than the minimum size being combined with an adjacent segment.

The scaling unit 4 scales each segment of the audio signal. Although it is possible to apply the same scaling factor (F) to each segment, the preferred embodiment of the device applies a distinct scaling factor (F) to each segment, or even to each sample as will be explained later. The scaling unit 4 typically scales up the audio signal of the selected frequency range: the amplitude of the signal (that is, of the samples) is typically increased so as to enhance the overall audio signal. In the present example, the bass frequencies of the audio signal are "boosted".

The enhanced audio signal of the selected (here: bass) frequency range is fed to the combination unit 5, where it is combined with the remainder of the audio signal. That is, the frequencies not passed by the filter 2 are fed to the combination unit 5 via the delay or additional filter unit 8. This unit 8 is preferably constituted by a complementary filter which passes those frequencies that are blocked by the filter 2. In the present example, the filter 2 can be a low-pass filter while the filter 8 may be a high-pass filter. The filters 2 and 8 may have approximately the same cut-off frequencies. Alternatively, the unit 8 is an all-pass filter which presents a delay for all frequencies to compensate for any delay in the parallel branch of units 2, 3 and 4. Embodiments can be envisaged in which the unit 8 merely is a through connection.

As mentioned above, the scaled audio signal of the selected frequency range and the un-scaled audio signal of the remaining frequencies are combined in the combining unit 5 to form a combined, enhanced audio signal. This combined audio signal may be output to a suitable transducer, such as a loudspeaker, possibly after amplification by a suitable amplifier. In the preferred embodiment of Fig. 1, however, an additional gain control check is made. To this end, the combined audio signal is fed to a comparator unit 6 for comparing the audio signal to a threshold. If the signal exceeds the threshold in any segment, the comparator unit 6 sends a corresponding adjustment factor to the adjustment unit 7 so as to reduce the audio signal level. The adjustment unit 7 may comprise a multiplier known *per se* for multiplying the combined audio signal by an adjustment factor determined by the comparator unit 6.

Of course other arrangements may be used for avoiding excessive signal levels. In an alternative embodiment (not shown), the input of comparator unit 6 is coupled to the output of filter unit 8 instead of to the output of combination unit 5, so as to receive the audio signal of the remaining frequencies which is to be combined with the scaled audio signal. The adjustment factor produced by the comparator unit 6 may then be fed to the scaling unit 4 so as to directly influence the scaling. In such an embodiment, the adjustment unit 7 may typically be omitted.

In the embodiment of Fig. 2, the adjustment unit 7 is arranged between the output of the scaling unit 4 and the input of the combining unit 5. The input of the comparator 6 is coupled to the output of the combining unit 5, as in the embodiment of Fig. 1. This arrangement provides a feed-back loop for gain control. It is noted that in digital signal processing devices it is possible to re-process samples, so that signal components exceeding the amplitude threshold of comparator 6 may be scaled down before being output by the device of Fig. 2.

An exemplary embodiment of the scaling unit 4 is shown in more detail in Fig. 3. The unit 4 is shown to comprise a multiplier 43 for multiplying the audio signal by a scaling factor F which is determined by the scaling factor unit 42. A level detection unit 41 determines the maximum signal level for each time segment of the signal, preferably of every sample, and passes the signal level on to the scaling factor unit 42 which determines an appropriate scaling factor F. The level detection unit 41 may be known *per se,* while the scaling factor unit 42 may be suitably constituted by a semiconductor memory containing a look-up table. The scaling factor F may initially be equal to one and may be decreased in response to the output signal of level detection unit 41.

The operation of the device 1 is schematically illustrated in Figs. 4a-c where a waveform A in Fig. 4a is shown to have multiple zero crossings Z. The waveform A is preferably produced by the filter 2 of Figs. 1 and 2, and only contains frequencies of the selected frequency range. The segmenting unit 3 divides the waveform A into segments S which are each bounded by zero crossings Z (only two segments S are shown for the sake of clarity of the illustration). The level detection unit 41 of the scaling unit 4 then determines the maximum signal value M present in each segment, as illustrated in Fig. 4b. This maximum value M is subsequently used to determine the scaling factor F, resulting in a scaled-up waveform B as shown in Fig. 4c. It is noted that the numbers at the horizontal axes in Figs. 4a-c refer to sample numbers, while the numbers at the vertical axes indicate normalized signal levels.

It is noted that in the present invention all signal samples between two zero crossing are multiplied by the same scaling factor. As a result, the waveform maintains its original shape and is not distorted. It is further noted that as each segment is processed substantially individually, the signal enhancement provided by the device 1 of the present invention is substantially instantaneous.

Several types of scaling factors may be used. The scaling factor F may be constant. This is illustrated in Table 1, where the signal values X (amplitudes of the waveform A of Fig. 4a) are multiplied by the scaling factor F to yield new signal values Y (amplitudes of the waveform B of Fig. 4c). As can be seen, the new signal values Y increase linearly with the signal values X.

**Table 1 (constant factor F):**

| **Number** | **X** | **F=1** | **Y=X.F** |
|---|---|---|---|
| 1 | 0.0 | 1.0 | 0.0 |
| 2 | 0.1 | 1.0 | 0.1 |
| 3 | 0.2 | 1.0 | 0.2 |
| 4 | 0.3 | 1.0 | 0.3 |
| 5 | 0.4 | 1.0 | 0.4 |
| 6 | 0.5 | 1.0 | 0.5 |
| 7 | 0.6 | 1.0 | 0.6 |
| 8 | 0.7 | 1.0 | 0.7 |
| 9 | 0.8 | 1.0 | 0.8 |
| 10 | 0.9 | 1.0 | 0.9 |
| 11 | 1.0 | 1.0 | 1.0 |

Alternatively, the scaling factor may be variable, typically varying with the signal values X so as to apply a larger scaling factor to smaller signal values. An example is illustrated in Table 2 where the scaling factor F varies linearly with the signal values X:F=2-X.

**Table 2:**

| **Number** | **X** | **F=2-X** | **Y=X.F** |
|---|---|---|---|
| 1 | 0.0 | 2.0 | 0.00 |
| 2 | 0.1 | 1.9 | 0.19 |
| 3 | 0.2 | 1.8 | 0.36 |
| 4 | 0.3 | 1.7 | 0.51 |
| 5 | 0.4 | 1.6 | 0.64 |
| 6 | 0.5 | 1.5 | 0.75 |
| 7 | 0.6 | 1.4 | 0.84 |
| 8 | 0.7 | 1.3 | 0.91 |
| 9 | 0.8 | 1.2 | 0.96 |
| 10 | 0.9 | 1.1 | 0.99 |
| 11 | 1.0 | 1.0 | 1.00 |

In the example of Table 3, the scaling factor F is a quadratic function of the signal value X: F = 3 - 3X + X². This results in an even stronger scaling of small signal values.

**Table 3:**

| **Number** | **X** | **F=3-3X+X²** | **Y = X.F** |
|---|---|---|---|
| 1 | 0.0 | 3.00 | 0.000 |
| 2 | 0.1 | 2.71 | 0.271 |
| 3 | 0.2 | 2.44 | 0.488 |
| 4 | 0.3 | 2.19 | 0.657 |
| 5 | 0.4 | 1.96 | 0.784 |
| 6 | 0.5 | 1.75 | 0.875 |
| 7 | 0.6 | 1.56 | 0.936 |
| 8 | 0.7 | 1.39 | 0.973 |
| 9 | 0.8 | 1.24 | 0.999 |
| 10 | 0.9 | 1.11 | 0.999 |
| 11 | 1.0 | 1.00 | 1.000 |

In still another embodiment, the scaling factor F is a cubic function of the signal values X, as illustrated in Table 4: F = 4 - 6X + 4X² - X³.

**Table 4:**

| **Number** | **X** | **F = 4-6X+4X²-X³** | **Y = X.F** |
|---|---|---|---|
| 1 | 0.0 | 4.000 | 0.000 |
| 2 | 0.1 | 3.439 | 0.344 |
| 3 | 0.2 | 2.952 | 0.590 |
| 4 | 0.3 | 2.533 | 0.760 |
| 5 | 0.4 | 2.176 | 0.870 |
| 6 | 0.5 | 1.875 | 0.936 |
| 7 | 0.6 | 1.624 | 0.974 |
| 8 | 0.7 | 1.417 | 0.992 |
| 9 | 0.8 | 1.248 | 0.998 |
| 10 | 0.9 | 1.111 | 0.999 |
| 11 | 1.0 | 1.000 | 1.000 |

The above scaling factors all have the common characteristic of always increasing with an increasing value of X. This is not essential and embodiments can be envisaged in which the scaling factor first increases and then slightly decreases, as illustrated in table 5 where F = 3 - 2X.

**Table 5:**

| **Number** | **X** | **F=3-2X** | **Y=X.F** |
|---|---|---|---|
| 1 | 0.0 | 3.0 | 0.00 |
| 2 | 0.1 | 2.8 | 0.28 |
| 3 | 0.2 | 2.6 | 0.52 |
| 4 | 0.3 | 2.4 | 0.72 |
| 5 | 0.4 | 2.2 | 0.88 |
| 6 | 0.5 | 2.0 | 1.00 |
| 7 | 0.6 | 1.8 | 1.08 |
| 8 | 0.7 | 1.6 | 1.12 |
| 9 | 0.8 | 1.4 | 1.12 |
| 10 | 0.9 | 1.2 | 1.08 |
| 11 | 1.0 | 1.0 | 1.00 |

The same formula of the scaling factor F may apply to an entire signal or only to one or several time segments. That is, successive time segments may be scaled using different scaling factor formulae. Of course different scaling factor formulae in adjacent time segments are preferably chosen in such a way that discontinuities are avoided.

As can be seen from the tables above, the scaling factors corresponding with the signal values may suitably be stored in look-up tables. Advantageously, the scaling factor unit 42 of Fig. 3 contains multiple tables corresponding with multiple scaling factor formulae, the particular table used being determined by the type of audio signal or by suitable control signals. Such control signals may for example correspond with different settings of a selector switch that allows the user to select a particular type of "bass boost" or other signal enhancement.

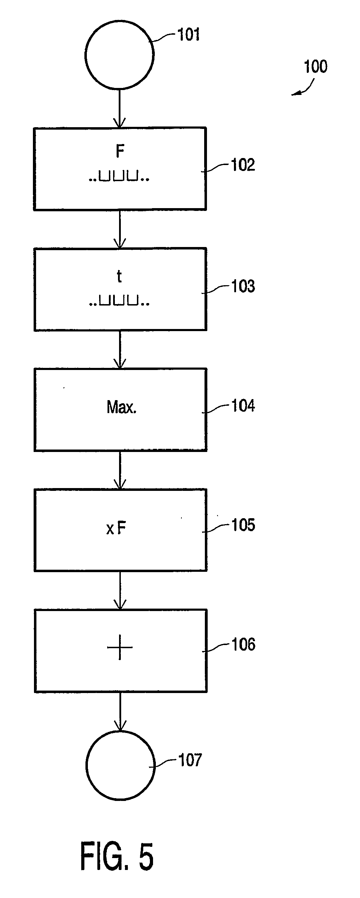

The method of the present invention is illustrated in Fig. 5. After initiating the method in step 101 ("Begin"), the frequency range is selected in step 102 ("Frequency Segmentation" or "Select Frequency Range"). This selected frequency range is processed in accordance with the present invention. All other frequencies may be blocked but are preferably preserved to be combined with the processed signal in step 106.

In step 103 ("Time Segmentation" or "Determine Time Segments"), the audio signal of the selected frequency range is divided into time segments (S in Fig. 4a) bounded by zero crossings (Z in Fig. 4a) of the signal. In step 104 ("Detect Maxima"), a maximum value (M in Fig. 4b) is determined for each time segment. This maximum value is used to determine a scaling factor F for scaling the samples of the audio signal in step 105 ("Scale Samples"). In step 106 ("Combine with Other Frequency Ranges") the processed audio signal of the selected frequency range is combined with the un-processed audio signal of the remaining frequency ranges to produce a combined output signal. The method concludes in step 107 ("End").

It is noted that the schematic diagram of Fig. 5 assumes a time-limited set of audio signal samples. It is of course possible to operate on an audio signal in real time in accordance with the present invention, in which case the method as illustrated is essentially repeated and may be carried out continuously.

In the case of stereo audio signals it is advantageous to apply the scaling of the present invention to a combined (left + right) signal as this avoids duplication of processing. Most of the stereo information is retained by the audio signal of the remaining frequencies, allowing the audio signal of the selected frequencies to be combined.

The present invention is based upon the insight that dividing an audio signal into time segments bounded by zero crossings allows the signal to be scaled without introducing any substantial artifacts, such as undesired harmonics. The present invention benefits from the further insight that scaling an audio signal per time segment allows a very effective and distortion-free signal enhancement, for example "bass boost".

The present invention is well suited to be realized not only in dedicated hardware- such as an ASIC- but also in software to run on a dedicated or generic processor. The steps of the methods can hence be realized as a computer program product.

Under computer program product should be understood any physical realization of a collection of commands enabling a processor -generic or special purpose-, after a series of loading steps to get the commands into the processor, to execute any of the characteristic functions of an invention. In particular the computer program product may be realized as data on a carrier such as e.g. a disk or tape, data present in a memory, data traveling over a network connection -wired or wireless- , or program code on paper. Apart from program code, characteristic data required for the program may also be embodied as a computer program product.

It is noted that any terms used in this document should not be construed so as to limit the scope of the present invention. In particular, the words "comprise(s)" and "comprising" are not meant to exclude any elements not specifically stated. Single (circuit) elements may be substituted with multiple (circuit) elements or with their equivalents.

It will be understood by those skilled in the art that the present invention is not limited to the embodiments illustrated above and that many modifications and additions may be made without departing from the scope of the invention as defined in the appending claims.

## Claims

1. A method of enhancing an audio signal, the method comprising the steps of:
- filtering the audio signal so as to select a frequency range,
- dividing the audio signal of the selected frequency range into time segments, and
- scaling the audio signal in each time segment so as to increase the sound level of the audio signal in said frequency range,
wherein the time segments are defined by zero crossings of the filtered audio signal.

2. The method according to claim 1, wherein each time segment is defined by two consecutive zero crossings of the filtered audio signal.

3. The method according to claim 1 or 2, wherein the step of scaling the audio signal involves a distinct scaling factor for each time segment.

4. The method according to any of the preceding claims, wherein the step of scaling involves a scaling factor which is constant for each time segment.

5. The method according to any of claims 1-3, wherein the step of scaling involves a scaling factor which varies with the amplitude of the audio signal.

6. The method according to claim 5, wherein the step of scaling involves a non-linear scaling factor, preferably involving a quadratic or cubic function.

7. The method according to any of the preceding claims, further comprising the step of:
- combining the scaled audio signal of the selected frequency range and the remainder of the audio signal of the previously not selected frequency range.

8. The method according to claim 7, further comprising the step of:
- comparing the amplitude of the combined audio signal with a threshold value, and
- adjusting the amplitude of the audio signal if the threshold is exceeded.

9. The method according to claim 8, wherein only the amplitude of the audio signal of the selected frequency range is adjusted.

10. The method according to claim 8 or 9, wherein the steps of comparing the amplitude of the combined audio signal and adjusting the amplitude of the audio signal is carried out per time segment.

11. The method according to any of the preceding claims, wherein the selected frequency range is a bass frequency range.

12. The method according to any of the preceding claims, comprising the further step of delaying any the signal components of other frequency ranges.

13. A device (1) for enhancing an audio signal, the device comprising:
- filter means (2) for filtering the audio signal so as to select a frequency range,
- dividing means (3) for dividing the audio signal of the selected frequency range into time segments, and
- scaling means (4) for scaling the audio signal in each time segment so as to increase the sound level of the audio signal in said frequency range,
wherein the time segments are defined by zero crossings of the filtered audio signal.

14. The device according to claim 13, wherein the dividing means (3) are arranged for defining each time segment by two consecutive zero crossings of the filtered audio signal.

15. The device according to claim 13 or 14, wherein the scaling means are arranged for using a distinct scaling factor for each time segment.

16. The device according to any of claims 13, 14 or 15, wherein the scaling means are arranged for using a scaling factor which is constant for each time segment.

17. The device according to any of claims 13 to 16, wherein the scaling means are arranged for using a scaling factor which varies with the amplitude of the audio signal.

18. The device according to claim 17, wherein the scaling means use a non-linear scaling factor, preferably involving a quadratic or cubic function.

19. The device according to any of claims 13 to 18, further comprising: combining means (5) for combining the scaled audio signal of the selected frequency range and the remained of the audio signal of the previously not selected frequency range.

20. The device according to claim 19, further comprising:
- comparing means (6) for comparing the amplitude of the combined audio signal with a threshold value, and
- adjusting means (7) for adjusting the amplitude of the audio signal if the threshold is exceeded.

21. The device according to claim 20, wherein the adjusting means (7) are arranged for adjusting only the amplitude of the audio signal of the selected frequency range.

22. The device according to claim 20 or 21, wherein the comparing means (6) and the adjusting means (7) are arranged for comparing the amplitude of the combined audio signal per time segment and adjusting the amplitude of the audio signal per time segment, respectively.

23. The method according to any of the preceding claims, wherein the selected frequency range is a bass frequency range.

24. The device according to any of claims 13-24, further comprising a delay element (8) for delaying the signal components of other frequency ranges.

25. An audio amplifier comprising a device (1) according to any of claims 13-24.

26. An audio system comprising a device (1) according to any of claims 13 - 24.

27. Computer program product comprising code enabling a processor to execute the method of one of the claims 1 to 12.

## Patentansprüche

1. Verfahren zum Verbessern eines Audiosignals, wobei das Verfahren die nachfolgenden Verfahrensschritte umfasst:
- das Filtern des Audiosignals zum Selektieren eines Frequenzbereichs,
- das Aufteilen des Audiosignals des selektierten Frequenzbereichs in Zeitsegmente, und
- das Skalieren des Audiosignals in jedem Zeitsegment zum Steigern des Schallpegels des Audiosignals in dem genannten Frequenzbereich,
wobei die Zeitsegmente durch Nulldurchgänge des gefilterten Audiosignals definiert sind.

2. Verfahren nach Anspruch 1, wobei jedes Zeitsegment durch zwei aufeinander folgende Nulldurchgänge des gefilterten Audiosignals definiert ist.

3. Verfahren nach Anspruch 1 oder 2, wobei der Verfahrensschritt der Skalierung des Audiosignals einen bestimmten Skalierungsfaktor für jedes Zeitsegment betrifft.

4. Verfahren nach einem der vorstehenden Ansprüche, wobei der Verfahrensschritt der Skalierung einen Skalierungsfaktor betrifft, der für jedes Zeitsegment konstant ist.

5. Verfahren nach einem der Ansprüche 1-3, wobei der Schritt der Skalierung einen Skalierungsfaktor betrifft, der mit der Amplitude des Audiosignals variiert.

6. Verfahren nach Anspruch 5, wobei der Verfahrensschritt einen nicht linearen Skalierungsfaktor betrifft, der vorzugsweise eine quadratische oder kubische Funktion betrifft.

7. Verfahren nach einem der vorstehenden Ansprüche, wobei das Verfahren weiterhin den nachfolgenden Verfahrensschritt umfasst:
- das Kombinieren des skalierten Audiosignals des selektierten Frequenzbereichs mit dem Rest des Audiosignals des vorher nicht selektierten Frequenzbereichs.

8. Verfahren nach Anspruch 7, wobei das Verfahren weiterhin die nachfolgenden Verfahrensschritte umfasst:
- das Vergleichen des kombinierten Audiosignals mit einem Schwellenwert, und
- das Einstellen der Amplitude des Audiosignals, wenn die Schwelle überschritten wird.

9. Verfahren nach Anspruch 8, wobei nur die Amplitude des Audiosignals des selektierten Frequenzbereichs eingestellt wird.

10. Verfahren nach Anspruch 8 oder 9, wobei die Verfahrensschritte zum Vergleichen der Amplitude des kombinierten Audiosignals und zum Einstellen der Amplitude des Audiosignals je Zeitsegment durchgeführt werden.

11. Verfahren nach einem der vorstehenden Ansprüche, wobei der selektierte Frequenzbereich ein niedriger Frequenzbereich ist.

12. Verfahren nach einem der vorstehenden Ansprüche, wobei das Verfahren weiterhin den Schritt der Verzögerung jedes beliebigen Signalanteils der anderen Frequenzbereiche umfasst.

13. Anordnung (1) zum Verbessern eines Audiosignals, wobei die Anordnung Folgendes umfasst:
- Filtermittel zum Filtern des Audiosignals zum Selektieren eines Frequenzbereichs,
- Teilungsmittel (3) zum Aufteilen des Audiosignals des selektierten Frequenzbereichs in Zeitsegmente, und
- Skalierungsmittel (4) zum Skalieren des Audiosignals in jedem Zeitsegment zum Steigern des Schallpegels des Audiosignals in dem genannten Frequenzbereich,
wobei die Zeitsegmente durch Nulldurchgänge des gefilterten Audiosignals definiert werden.

14. Anordnung nach Anspruch 13, wobei die Teilungsmittel (3) dazu vorgesehen sind, jedes Zeitsegment durch zwei aufeinander folgende Nulldurchgänge des gefilterten Audiosignals zu definieren.

15. Anordnung nach Anspruch 13 oder 14, wobei die Skalierungsmittel dazu vorgesehen sind, einen bestimmten Skalierungsfaktor für jedes Zeitsegment zu verwenden.

16. Anordnung nach einem der Ansprüche 13, 14 oder 15, wobei die Skalierungsmittel dazu vorgesehen sind, einen Skalierungsfaktor zu verwenden, der für jedes Zeitsegment konstant ist.

17. Anordnung nach einem der Ansprüche 13 bis 16, wobei die Skalierungsmittel dazu vorgesehen sind, einen Skalierungsfaktor zu verwenden, der mit der Amplitude des Audiosignals variiert.

18. Anordnung nach Anspruch 17, wobei die Skalierungsmittel einen nicht linearen Skalierungsfaktor, vorzugsweise eine quadratische oder kubische Funktion betreffend, verwenden.

19. Anordnung nach einem der Ansprüche 13 bis 18, die weiterhin Folgendes umfasst:
- Kombiniermittel (5) zum Kombinieren des skalierten Audiosignals des selektierten Frequenzbereichs mit dem Rest des Audiosignals des vorher nicht selektierten Frequenzbereichs.

20. Anordnung nach Anspruch 19, die weiterhin Folgendes umfasst:
- Vergleichsmittel (6) zum vergleichen der Amplitude des kombinierten Audiosignals mit einem Schwellenwert, und
- Einstellmittel (7) zum Einstellen der Amplitude des Audiosignals, wenn die Schwelle überschritten wird.

21. Anordnung nach Anspruch 20, wobei die Einstellmittel (7) dazu vorgesehen sind, nur die Amplitude des Audiosignals des selektierten Frequenzbereichs einzustellen.

22. Anordnung nach Anspruch 20 oder 21, wobei die Vergleichsmittel (6) und die Einstellmittel (7) dazu vorgesehen sind, die Amplitude des kombinierten Audiosignals je Zeitsegment zu vergleichen bzw. die Amplitude des Audiosignals je Zeitsegment einzustellen.

23. Verfahren nach einem der vorstehenden Ansprüche, wobei der selektierte Frequenzbereich ein Bassfrequenzbereich ist.

24. Anordnung nach einem der Ansprüche 13 - 24, die weiterhin ein Verzögerungselement (8) zum verzögern der Signalanteile anderer Frequenzbereiche umfasst.

25. Audioverstärker mit einer Anordnung (1) nach einem der Ansprüche 13-24.

26. Audiosystem mit einer Anordnung (1) nach einem der Ansprüche 13-24.

27. Computerprogrammprodukt mit Code, der es ermöglicht, dass ein Prozessor das Verfahren nach einem der Ansprüche 1 bis 12 durchführt.

## Revendications

1. Procédé destiné à améliorer un signal audio, le procédé comprenant les étapes suivantes :
- filtrer le signal audio de manière à sélectionner une gamme de fréquences;
- diviser le signal audio de la gamme de fréquences sélectionnée en segments temporels, et
- changer l'échelle du signal audio dans chaque segment temporel de manière à augmenter le niveau sonore du signal audio dans ladite gamme de fréquences,
les segments temporels étant définis comme des passages à zéro du signal audio filtré.

2. Procédé suivant la revendication 1, dans lequel chaque segment temporel est défini par deux passages à zéro consécutifs du signal audio filtré.

3. Procédé suivant la revendication 1 ou 2, dans lequel l'étape de changement d'échelle du signal audio implique un facteur d'échelle distinct pour chaque segment temporel.

4. Procédé suivant l'une quelconque des revendications précédentes, dans lequel l'étape de changement d'échelle implique un facteur d'échelle qui est constant pour chaque segment temporel.

5. Procédé suivant l'une quelconque des revendications 1 à 3, dans lequel l'étape de changement d'échelle implique un facteur d'échelle variant avec l'amplitude du signal audio.

6. Procédé suivant la revendication 5, dans lequel l'étape de changement d'échelle implique un facteur d'échelle non linéaire, impliquant de préférence une fonction quadratique ou cubique.

7. Procédé suivant l'une quelconque des revendications précédentes, comprenant en outre l'étape suivante :
- la combinaison du signal audio ayant subi un changement d'échelle de la gamme de fréquences sélectionnée avec le reste du signal audio de la gamme de fréquences non sélectionnée auparavant.

8. Procédé suivant la revendication 7, comprenant en outre les étapes suivantes :
- la comparaison de l'amplitude du signal audio combiné à une valeur de seuil, et
- l'adaptation de l'amplitude du signal audio si le seuil est dépassé.

9. Procédé suivant la revendication 8, dans lequel seule l'amplitude du signal audio de la gamme de fréquences sélectionnée est adaptée.

10. Procédé suivant la revendication 8 ou 9, dans lequel les étapes de comparaison de l'amplitude du signal audio combiné et d'adaptation de l'amplitude du signal audio sont exécutées pour chaque segment temporel.

11. Procédé suivant l'une quelconque des revendications précédentes, dans lequel la gamme de fréquences sélectionnée est une gamme de basses fréquences.

12. Procédé suivant l'une quelconque des revendications précédentes, comprenant l'étape supplémentaire de retardement de toute composante de signal d'autres gammes de fréquences.

13. Dispositif (1) destiné à améliorer un signal audio, le dispositif comprenant :
- des moyens formant filtre (2) destinés à filtrer le signal audio de manière à sélectionner une gamme de fréquences;
- des moyens de division (2) destinés à diviser le signal audio de la gamme de fréquences sélectionnée en segments temporels, et
- des moyens de changement d'échelle (4) destinés à changer l'échelle du signal audio dans chaque segment temporel de manière à augmenter le niveau sonore du signal audio dans ladite gamme de fréquences,
les segments temporels étant définis par des passages à zéro du signal audio filtré.

14. Dispositif suivant la revendication 13, dans lequel les moyens de division (3) sont conçus pour définir chaque segment temporel par deux passages à zéro consécutifs du signal audio filtré.

15. Dispositif suivant la revendication 13 ou 14, dans lequel les moyens de changement d'échelle sont conçus pour utiliser un facteur d'échelle distinct pour chaque segment temporel.

16. Dispositif suivant la revendication 13, 14 ou 15, dans lequel les moyens de changement d'échelle sont conçus pour utiliser un facteur d'échelle qui est constant pour chaque segment temporel.

17. Dispositif suivant l'une quelconque des revendications 13 à 16, dans lequel les moyens de changement d'échelle sont conçus pour utiliser un facteur d'échelle variant avec l'amplitude du signal audio.

18. Dispositif suivant la revendication 17, dans lequel les moyens de changement d'échelle utilisent un facteur d'échelle non linéaire, impliquant de préférence une fonction quadratique ou cubique.

19. Dispositif suivant l'une quelconque des revendications 13 à 18, comprenant en outre : des moyens de combinaison (5) destinés à combiner le signal audio ayant subi un changement d'échelle de la gamme de fréquences sélectionnée avec le reste du signal audio de la gamme de fréquences non sélectionnée auparavant.

20. Dispositif suivant la revendication 19, comprenant en outre :
- des moyens de comparaison (6) destinés à comparer l'amplitude du signal audio combiné et une valeur de seuil, et
- des moyens d'adaptation (7) destinés à adapter l'amplitude du signal audio si le seuil est dépassé.

21. Dispositif suivant la revendication 20, dans lequel les moyens d'adaptation (7) sont conçus pour adapter uniquement l'amplitude du signal audio de la gamme de fréquences sélectionnée.

22. Dispositif suivant la revendication 20 ou 21, dans lequel les moyens de comparaison (9) et les moyens d'adaptation (7) sont conçus respectivement pour comparer l'amplitude du signal audio combiné pour chaque segment temporel, et pour adapter l'amplitude du signal audio pour chaque segment temporel.

23. Procédé suivant l'une quelconque des revendications précédentes, dans lequel la gamme de fréquences sélectionnée est une gamme de basses fréquences.

24. Dispositif suivant l'une quelconque des revendications 13 à 24, comprenant en outre un élément à retard (8) destiné à retarder les composantes de signal d'autres gammes de fréquences.

25. Amplificateur audio comprenant un dispositif (1) suivant l'une quelconque des revendications 13 à 24.

26. Système audio comprenant un dispositif (1) suivant l'une quelconque des revendications 13 à 24.

27. Produit de programme informatique comprenant un code activant un processeur afin d'exécuter le procédé suivant l'une des revendications 1 à 12.
